# FASCICULE DE BREVET EUROPEEN

(11) **EP 2 933 177 B1**
(45) Date de publication et mention de la délivrance du brevet: **15.06.2016**
(21) Numéro de dépôt: 15159502.2
(22) Date de dépôt: 17.03.2015
(51) Int. Cl.: B62K 19/30, B62J 23/00

(54) **Ensemble pour cycle**
Anordnung für Fahrrad
Assembly for cycle

(30) Priorité: 18.04.2014 FR 1453531
(43) Date de publication de la demande: 21.10.2015
(62) Demande divisionnaire de: 15159848.9
(73) Titulaire: Look Cycle International, 58000 Nevers (FR)
(72) Inventeur: Jaillet, Vincent, 58130 Urzy (FR)
(74) Mandataire: Petit, Maxime

(56) Documents cités:
- US-A- 4 887 827
- US-A1- 2012 261 897
- US-A1- 2013 221 633

## Description

La présente invention concerne de manière générale un ensemble pour cycle, et plus particulièrement la partie d'un cycle comportant le cadre du cycle et la fourche avant destinée à supporter une roue avant.

Un cadre de cycle comprend classiquement des zones adaptées pour le montage d'une selle, d'un pédalier, d'une fourche avant et du cintre de guidage (guidon) associé. En particulier, une zone avant du vélo comprend une douille (ou tube) de direction où sont montés d'une part, la fourche avant, et d'autre part, un corps de potence portant le cintre de guidage.

La fourche sur laquelle est montée la roue avant du cycle comporte, de son côté, une tête de fourche surmontée d'un pivot de fourche permettant de faire pivoter la fourche par rapport au cadre de cycle. Au moins une branche, et le plus souvent une paire de branches, s'étend depuis la tête de fourche dans une direction opposée à celle du pivot de fourche, pour porter à son extrémité inférieure l'axe de la roue avant.

On rencontre traditionnellement des pivots de fourche montés de manière à s'étendre longitudinalement à l'intérieur de la douille de direction, au travers d'un roulement inférieur et d'un roulement supérieur d'un jeu de direction monté dans un logement inférieur, respectivement supérieur, de la douille de direction.

Le document US 20120261897 décrit un ensemble pour cycle selon le préambule de la revendication 1.

Il est apparu qu'il était très intéressant, sur le plan de l'aérodynamisme, de travailler sur l'avant du vélo de façon à réduire sa surface frontale.

Une première solution connue consiste à donner à la douille de direction une forme générale de diabolo, avec deux parties extrémales évasées au niveau du logement inférieur, respectivement supérieur, accueillant le roulement inférieur, respectivement supérieur, du jeu de direction, et une portion tubulaire intermédiaire plus affinée. Néanmoins, avec cette solution, les épaisseurs obtenues au niveau des parties évasées sont de l'ordre de 50 millimètres, et il est impossible aujourd'hui d'avoir une épaisseur inférieure à 35 millimètres à l'endroit le plus fin de la douille de direction (en vue de face). Ceci est dû au fait que les pivots de fourche sont aujourd'hui conçus avec un diamètre externe de 28,6 millimètres (1 pouce et 1/8), ce afin d'offrir une meilleure rigidité de l'avant du vélo. Certaines fourches, dites 1 pouce et 1/2, présentent même un pivot de forme conique avec une partie supérieure dont le diamètre externe correspond au diamètre standard de 28,6 millimètres pour rester compatible avec toutes sortes de potences, et une embase de diamètre élargi à 37,8 millimètres.

Le fait de réduire le diamètre de la douille de direction se heurte à deux limitations : tout d'abord, le règlement UCI (Union Cycliste Internationale) impose une largeur minimum de cadre de 25 millimètres. De plus, les agencements actuels de cadres et de fourches ne permettent pas d'envisager un pivot de fourche dont le diamètre extérieur serait inférieur à 25 millimètres. En effet, un pivot de fourche aussi fin s'avère fragile et risquerait de rompre en cas de choc frontal sur la roue avant. En effet, lors d'un choc avant, la tête de fourche peut subir un déplacement trop important vers l'arrière, ce qui peut causer la rupture de la fourche au niveau de la liaison entre la tête de fourche et le pivot de fourche.

On connaît également, du document EP 0 490120 B1 au nom de la Demanderesse, une fourche avant dans laquelle la tête de fourche comporte une partie frontale portant la potence et déportée à l'avant de la douille de direction, avec deux projections arrières s'étendant perpendiculairement à l'axe de la douille de direction, de part et d'autre des extrémités de cette douille. Cette solution permet d'obtenir une épaisseur de l'avant du vélo (vue de face) correspondant à l'épaisseur de la partie frontale de l'ordre de 28 millimètres. Cependant, le fait que la partie avant de la fourche soit déportée à l'avant de la douille de direction peut donner de mauvaises sensations au cycliste lorsqu'il tourne. De plus, le gain en aérodynamisme obtenu par la finesse de la partie frontale n'est réel que lorsque la roue est dans l'alignement. Dès lors que la roue, et donc la fourche, est légèrement tournée vers la droite ou vers la gauche, il se crée des perturbations et la fourche offre une surface frontale qui n'est pas optimale en termes d'aérodynamisme. Enfin, ce système est plus lourd qu'un système traditionnel.

La présente invention a pour objectif de pallier les limitations des solutions connues en proposant un ensemble de cycle dont l'agencement entre le cadre et la fourche avant autorise, dans les limites du règlement UCI précité, d'avoir une épaisseur frontale de la douille de direction égale à 25 millimètres à l'endroit le plus fin, et l'emploi d'un pivot de fourche de diamètre externe inférieur à 25 millimètres.

Pour ce faire, la présente invention a pour objet un ensemble pour cycle comportant :
- un cadre de cycle comprenant une douille de direction comportant une ouverture d'extrémité inférieure et une ouverture d'extrémité supérieure, et
- une fourche avant comportant une tête de fourche surmontée d'un pivot de fourche s'étendant longitudinalement à l'intérieur de la douille de direction et au moins une branche s'étendant depuis la tête de fourche dans une direction opposée à celle du pivot de fourche, pour supporter une roue avant;
caractérisé en ce que le pivot de fourche a un diamètre externe inférieur à 25 millimètres, et en ce que la douille de direction comporte une zone de butée s'étendant vers le bas sous ladite ouverture d'extrémité inférieure et formant un logement apte à recevoir une zone arrière de la tête de fourche placée en regard de ladite zone de butée de manière à réaliser un système de butée apte à limiter un déplacement de ladite tête de fourche en cas de choc frontal sur la roue avant.

Selon d'autres caractéristiques possibles :
- l'ensemble comporte un élément élastiquement déformable entre ladite zone arrière et ladite zone de butée ;
- en variante, l'ensemble comporte un élément intercalé entre ladite zone arrière et ladite zone de butée, apte à faciliter un glissement de la zone arrière de la tête de fourche sur la zone de butée lors d'un pivotement de la fourche avant ;
- la douille de direction comporte au moins une portion longitudinale intermédiaire de diamètre égal à 25 millimètres ;
- le pivot de fourche s'étend dans la douille de direction au travers d'un roulement inférieur d'un jeu de direction ;
- le pivot de fourche s'étend dans la douille de direction au travers également d'un roulement supérieur dudit jeu de direction ;
- en variante, le pivot de fourche comporte une extrémité libre placée en-dessous d'un roulement supérieur dudit jeu de direction, à laquelle est fixée, solidaire en rotation, une extrémité libre d'un pivot de potence lié à rotation avec un corps de potence ;
- l'extrémité libre du pivot de fourche et l'extrémité libre du pivot de potence sont conformées de manière à réaliser ensemble un couplage de type Hirth ;
- le pivot de fourche et le pivot de potence sont fixés l'un à l'autre par l'intermédiaire d'une vis s'étendant longitudinalement dans l'axe de la douille de direction ;
- le pivot de fourche, la vis et le pivot de potence sont avantageusement creux pour permettre le passage d'au moins un câble ;
- le pivot de potence et le corps de potence forment une pièce de potence monobloc ;
- le pivot de fourche, la tête de fourche et ladite au moins une branche forment une fourche avant monobloc;
- l'ensemble pour cycle comporte en outre un système de butée de direction pour limiter le débattement angulaire de la fourche, le système comportant une première gorge sur la tête de fourche, une deuxième gorge sur le cadre au niveau de la zone de butée, et un élément de butée de direction monté libre entre la première gorge et la deuxième gorge ;
- l'élément de butée de direction peut être un pion ou une bille, par exemple une bille en élastomère ;
- pour un débattement angulaire de la fourche limité à 120°, chacune des première et deuxième gorges est par exemple dimensionnée pour offrir 60° de liberté à l'élément de butée de direction.

D'autres caractéristiques et avantages de la présente invention apparaîtront plus clairement de la description qui va suivre de plusieurs modes de réalisation non limitatifs de l'invention, faite en référence aux figures annexées, dans lesquelles :
- la figure 1 représente une vue partielle, en perspective, de la partie avant d'un cycle comportant un ensemble conforme à l'invention ;
- la figure 2 est une vue partielle en coupe latérale de l'agencement de différents éléments sur l'avant d'un cadre selon un premier mode de réalisation ;
- la figure 3 est un vue en perspective éclatée de différents éléments composant un ensemble de cycle selon un autre mode de réalisation possible de l'invention ;
- les figures 4a, 4b, 4c illustrent des vues en coupe latérale donnant trois variantes de réalisation d'un ensemble de cycle conforme à l'invention ;
- la figure 5 est une vue partielle en perspective montrant la coopération d'une tête de fourche avant avec le cadre de cycle dans un mode de réalisation préféré de l'invention ;
- la figure 5a est une vue partielle en perspective montrant la coopération d'une tête de fourche avant avec un cadre dans une autre configuration ;
- la figure 6 est une vue partielle de face d'un cycle comportant un ensemble selon l'invention.

Dans les différentes figures, les éléments identiques ou équivalents porteront les mêmes signes de référence.

L'ensemble de cycle comporte un cadre 1 comportant classiquement des zones adaptées pour le montage d'une selle, d'un pédalier, d'une fourche avant et du cintre de guidage (guidon) associé. Pour ne pas surcharger inutilement les figures par rapport à la compréhension de l'invention, seule la zone avant comprenant la douille 10 de direction et le tube diagonal 11 permettant de relier ce noeud avant au noeud (non représenté) portant le pédalier sont visibles sur les figures. Il convient par ailleurs de noter que la présence d'un tube diagonal n'est pas obligatoire, certains vélos, en particulier ceux destinés aux épreuves de triathlon, ne présentant généralement pas un tel tube diagonal.

La douille 10 de direction comprend une ouverture 10a d'extrémité inférieure et une ouverture 10b d'extrémité supérieure.

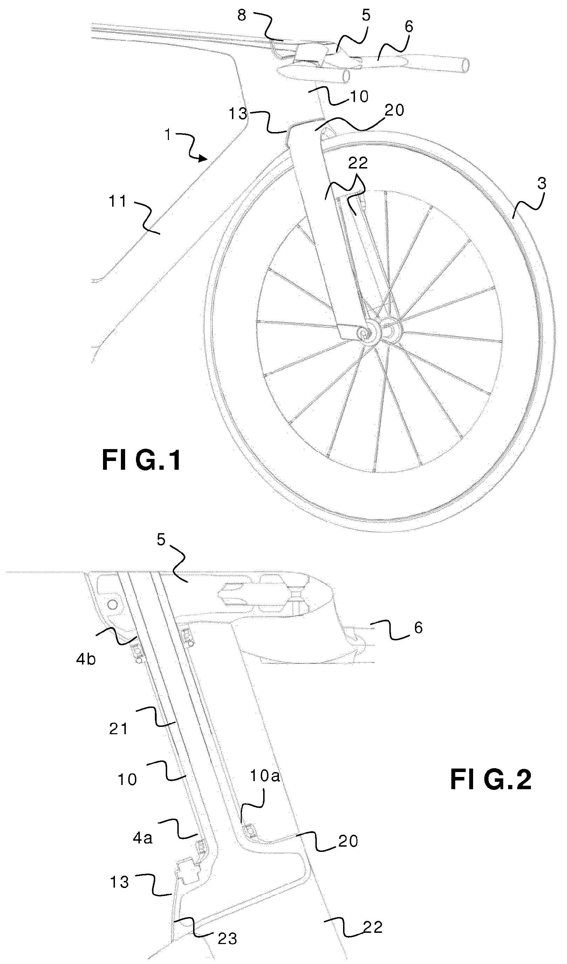

L'ensemble de cycle comporte en outre une fourche 2 avant comprenant classiquement une tête 20 de fourche surmontée d'un pivot 21 de fourche, et deux branches 22 s'étendant depuis la tête 20 de fourche dans une direction opposée à celle du pivot 21 de fourche. Dans certains cas, la fourche avant peut être prévue avec une unique branche. Les extrémités inférieures des branches 22 sont aptes à recevoir l'axe d'une roue avant 3, comme visible sur la figure 1.

Comme cela apparaît clairement sur les différentes figures, la fourche 2 est montée sur le cadre 1 de sorte que le pivot 21 de fourche s'étende longitudinalement à l'intérieur et dans l'axe de la douille 10 de direction.

Conformément à l'invention, la douille 10 de direction comporte une zone 13 de butée qui s'étend vers le bas, en dessous de l'ouverture 10a d'extrémité inférieure, et formant un logement apte à recevoir une zone arrière 23 de la tête 20 de fourche placée en regard de ladite zone 13 de butée.

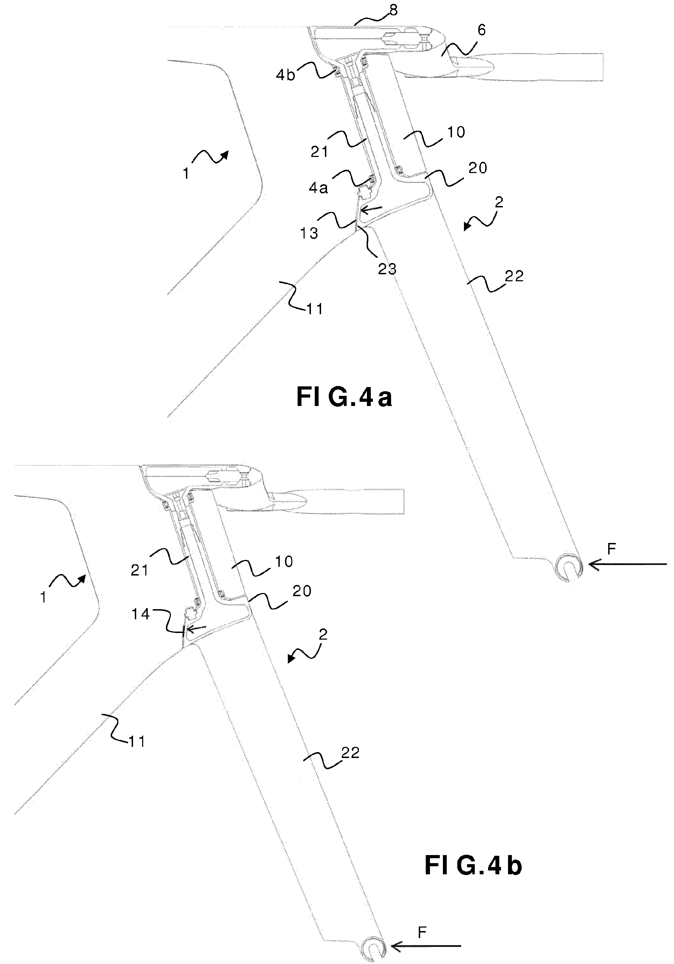

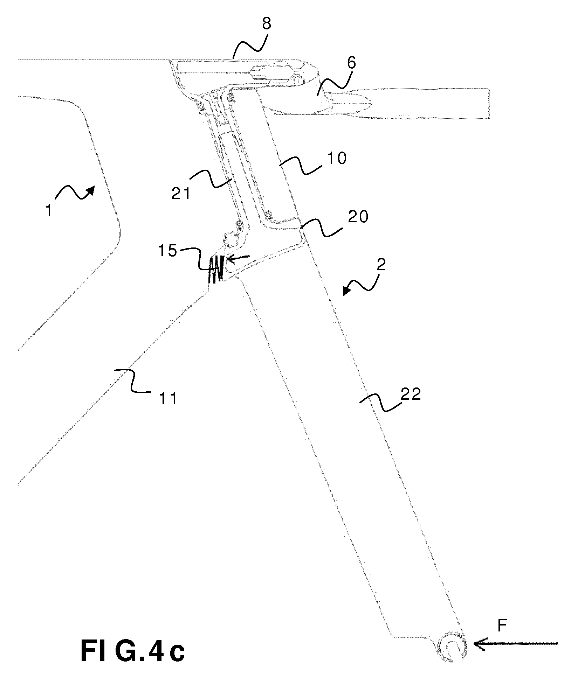

Selon un mode de réalisation représenté sur la figure 4a, lorsque la fourche 2 est montée sur le cadre 1, la zone arrière 23 se retrouve en regard, sans contact, avec la zone 13 de butée. La zone arrière présente un profil qui suit au plus près le profil du logement formé par la zone 13 de butée. Dans une première variante illustrée sur la figure 4b, un élastomère 14 est interposé dans l'espace entre la zone arrière 23, et la zone 13 de butée. L'élastomère 14 peut être indifféremment porté par le cadre 1 ou la tête 20 de fourche. Selon une autre variante (figure 4c), l'élastomère est remplacé par un ressort 15 ou tout autre élément élastiquement déformable permettant d'absorber l'énergie du choc frontal.

Selon encore une autre variante (non représentée), on peut envisager d'intercaler un élément non-élastiquement déformable, par exemple une mousse. En cas de choc frontal, un tel élément présentera une marque qui permettra de garder une trace sur le fait qu'un choc a eu lieu et qu'une réparation s'impose éventuellement.

Selon encore une autre variante, l'élément intercalé peut être un élément dont le matériau est choisi pour faciliter un glissement de la zone arrière 23 de la tête de fourche sur la zone 13 de butée lors du pivotement de la fourche avant. Ainsi, il est possible d'autoriser un contact entre la tête de fourche et la zone 13 de butée qui n'entrave pas, en conditions normales, le pivotement de la fourche avant. Le matériau utilisé peut aussi dans ce cas être élastiquement déformable pour absorber l'énergie d'un choc frontal.

Dans tous les cas, cet agencement de la zone arrière 23 en regard avec la zone 13 de butée sur le cadre 1 permet de réaliser un système de butée apte à limiter un déplacement arrière de la tête de fourche en cas de choc frontal sur la roue avant 3.

Grâce à ce système de butée, il est possible d'envisager l'utilisation d'une fourche dont le diamètre de pivot de fourche est inférieur à 25 millimètres, reçu dans une douille de direction présentant au moins une portion intermédiaire de 25 millimètres d'épaisseur frontale, comme imposé par le règlement UCI. En particulier, les essais de la Demanderesse ont montré qu'avec un pivot 21 de fourche de 19 millimètres de diamètre extérieur, la tête de fourche selon les agencements connus pouvait subir un déplacement vers l'arrière de 18 millimètres suite à un effort de 2000 Newton exercé sur l'extrémité inférieure des branches (flèche F sur les figures 4a à 4c) pour simuler un choc frontal, alors que le déplacement subi n'est que de 14 millimètres lorsque le système de butée est prévu.

En d'autres termes, le système de butée selon l'invention permet de compenser la faiblesse structurelle d'un pivot de fourche de faible diamètre en limitant le déplacement arrière de la tête de fourche en cas de choc frontal.

Le montage proprement dit des différents composants au niveau de la douille de direction peut s'effectuer de manière classique, comme décrit par exemple dans le document EP 1 298 048, au nom de la Demanderesse, et schématisé sur la figure 2. Dans ce cas, lorsque la fourche avant est en place sur le cadre, le pivot 21 de fourche s'étend dans la douille 10 de direction au travers d'un roulement inférieur 4a et d'un roulement supérieur 4b d'un jeu de direction. L'extrémité libre du pivot 21 de fourche offre une surface de fixation à un corps de potence 5 recevant par ailleurs le cintre ou guidon 6. Le corps de potence 5 est serré autour du pivot 21 de fourche par l'intermédiaire d'une vis de fixation 7 s'étendant transversalement par rapport à la direction longitudinale du pivot 21 de fourche.

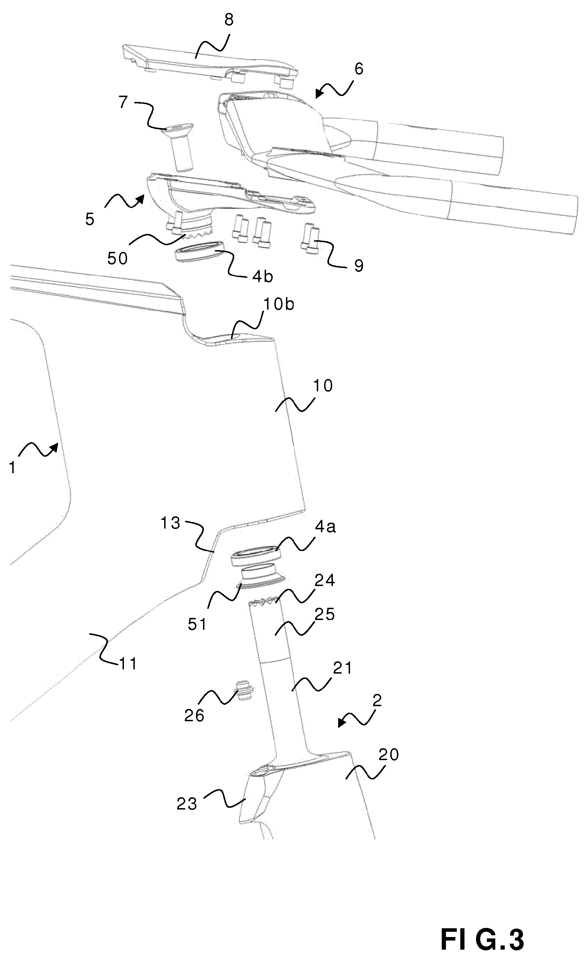

Un autre mode de réalisation particulièrement avantageux va à présent être décrit en référence notamment aux figures 3 et 4a à 4b. Dans ce mode de réalisation, lorsque la fourche avant 2 est en place sur le cadre, le pivot 21 de fourche s'étend ici encore dans la douille 10 de direction au travers du roulement inférieur 4a du jeu de direction, mais son extrémité libre reste cette fois-ci placée en dessous du roulement supérieur 4b du jeu de direction. Le corps de potence 5 comporte quant à lui un pivot 50 de potence dont l'extrémité libre vient se fixer, solidaire en rotation, sur l'extrémité libre du pivot 21 de fourche, ou, comme représenté, sur l'extrémité libre 24 d'un insert métallique 25 collé dans le prolongement axial de ce pivot 21 de fourche.

Le pivot 21 de fourche, la tête 20 de fourche et les branches 22 peuvent être réalisés dans le même matériau, par exemple un composite. L'ensemble de la fourche avant est de préférence monobloc. De même, le pivot 50 de potence et le corps de potence 5 peuvent être réalisés également dans le même matériau, et sous forme d'une pièce de potence monobloc.

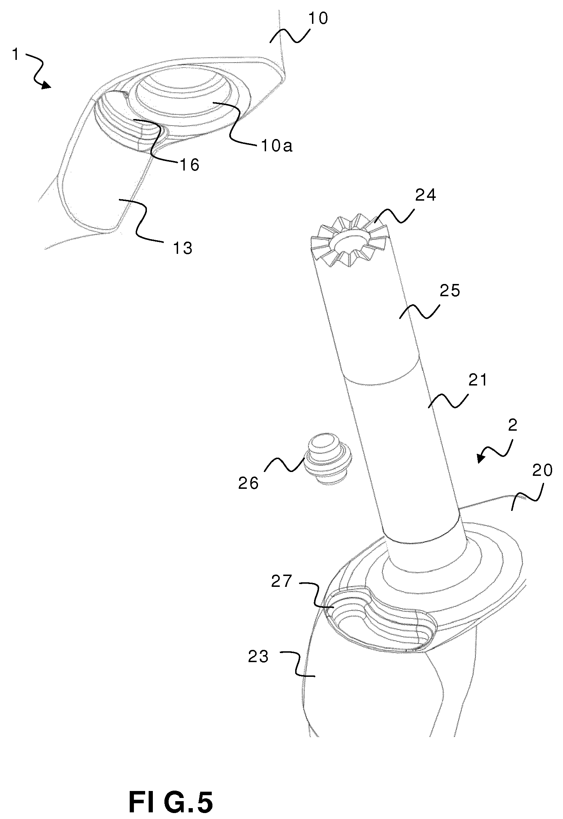

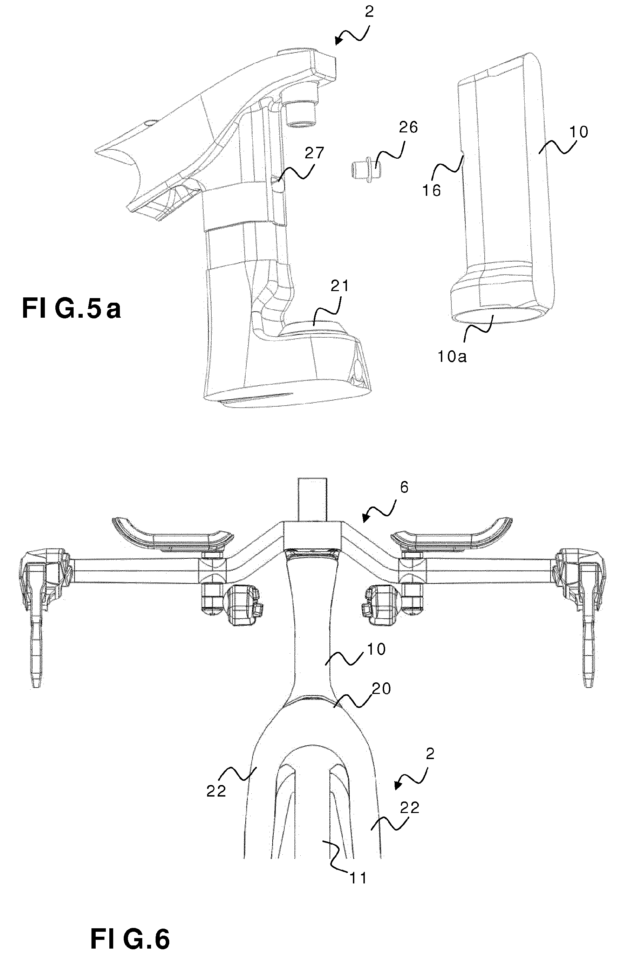

Avantageusement, l'extrémité libre 24 et l'extrémité libre du pivot 50 de potence sont conformées de manière à réaliser ensemble un couplage de type Hirth. Les dents d'engrenage de ce couplage sont plus particulièrement visibles sur la figure 5 pour l'extrémité 24 de l'insert 25 collé au pivot 21 de fourche. Le pivot 21 de fourche et le pivot 50 de potence sont fixés l'un à l'autre par l'intermédiaire d'une vis 7 s'étendant longitudinalement dans l'axe de la douille 10 de direction.

Dans un mode préféré de réalisation, le pivot 21 de fourche, la vis 7 et le pivot 50 de potence sont creux pour permettre le passage d'au moins un câble, en particulier un câble de frein (non représenté).

Un élément élastique annulaire (non représenté) peut être avantageusement prévu pour rattraper le jeu entre le roulement supérieur 4b et le corps de potence 5. Une bague fendue 51 en métal est également prévue de façon à maîtriser la côte et l'état de surface pour le montage du roulement inférieur 4a. Par ailleurs, cette bague protège le pivot 21 de fourche de l'acier du roulement inférieur 4a, en particulier évite le poinçonnage du pivot lorsque ce dernier est en carbone.

La figure 3 montre également le cintre 6 et un capot 8 de potence qui viennent se fixer sur le corps de potence 5 par l'intermédiaire de vis 9.

La figure 3 montre enfin un pion 26 d'un système de butée de direction qui va être décrit plus en détails en référence avec la figure 5.

On rappelle au préalable que le règlement UCI précité impose de pouvoir tourner la fourche d'un vélo d'un angle de 120° au minimum, 60° sur la droite et 60° sur la gauche. Or, dans les cas où les câbles de changement de vitesse ou de freinage sont intégrés dans le cadre, il est nécessaire de limiter cet angle de débattement à 120° pour ne pas risquer d'endommager ces câbles. Il existe déjà des systèmes de butée de direction dans lesquels un pion de butée fixé au cadre permet à une gorge en forme de portion de cercle réalisée dans la fourche de se déplacer sur 120°. Plus précisément, en tournant la fourche d'un côté ou de l'autre, le pion se déplace transversalement à la gorge et vient buter contre une des deux extrémités de la gorge, limitant ainsi le débattement angulaire. Ce système ne peut cependant pas être adopté ici du fait de la finesse de la tête de fourche qui ne permet pas de réaliser une gorge avec un débattement angulaire de 120°.

Pour résoudre ce problème d'encombrement, on prévoit de réaliser, comme représenté sur la figure 5, une première gorge 27 sur la tête 20 de fourche, et une deuxième gorge 16 sur le cadre, au niveau de la zone 13 de transition, chacune des première et deuxième gorges 27, 16 donnant 60° de liberté. Le pion 26 de butée de direction est monté libre entre ces deux gorges 16, 27, de sorte que lorsque le pion arrive en butée sur l'extrémité d'une des deux gorges, l'autre gorge lui offre encore 60° de liberté. Dans un mode de réalisation non représenté, le pion 26 de butée de direction et le fond des gorges 16, 27 peuvent être percés pour autoriser le passage d'une gaine de câble.

En variante, le pion de butée peut être remplacé par une bille apte à rouler dans les première et deuxième gorges 27, 16. La bille est de préférence réalisée en un matériau élastomère de façon à ne pas venir abîmer le cadre ou la tête de fourche lorsqu'elle vient buter sur les extrémités des gorges. On comprend aisément que ce système de butée de direction, particulièrement intéressant ici du fait de son faible encombrement, peut être adopté également pour d'autres ensembles pour cycle qui ne présenteraient pas la finesse de cadre recherchée ici. En d'autres termes, ce système de butée de direction à deux gorges présente un intérêt également pour des ensembles classiques pour lesquels la douille de direction ne présenterait par la zone 13 de butée décrite ci-avant. Ainsi, comme le montre l'exemple de la figure 5a, on peut adopter le système de butée selon le principe précédent pour un ensemble pour cycle dans lequel la fourche 2 est déportée à l'avant d'une douille de direction 10, avec un élément formant pivot de fourche 21 apte à venir s'insérer dans l'axe longitudinal de la douille 10, au travers de l'ouverture 10a d'extrémité inférieure. Dans ce cas, le pion 26 du système de butée est correctement orienté pour être monté libre entre une première gorge 16 sur la douille et une deuxième gorge 27 sur la fourche 2 d'orientation transverse par rapport à l'axe de la douille, chaque gorge donnant 60° de liberté. Ici encore, le pion pourrait être remplacé par une bille.

La figure 6 est une vue partielle avant d'un cycle équipé d'un ensemble selon l'invention. On voit sur cette figure que la douille 10 de direction présente une forme générale de diabolo, avec deux parties évasées en extrémités qui correspondent aux zones recevant les roulements supérieur et inférieur du jeu de direction, et une portion intermédiaire beaucoup plus fine. Avec un pivot 21 de fourche de 19 millimètres de diamètre extérieur, on arrive à obtenir un cadre d'épaisseur de 25 millimètres au niveau de la portion intermédiaire, et de 35 millimètres au niveau des parties évasées.

## Revendications

1. Ensemble pour cycle comportant :
- un cadre (1) de cycle comprenant une douille (10) de direction comportant une ouverture (10a) d'extrémité inférieure et une ouverture (10b) d'extrémité supérieure, et
- une fourche (2) avant comportant une tête (20) de fourche surmontée d'un pivot (21) de fourche s'étendant longitudinalement à l'intérieur de la douille (10) de direction et au moins une branche (22) s'étendant depuis la tête (20) de fourche dans une direction opposée à celle du pivot (21) de fourche, pour supporter une roue avant (3) ;
**caractérisé en ce que** le pivot (21) de fourche a un diamètre externe inférieur à 25 millimètres et **en ce que** la douille (10) de direction comporte une zone (13) de butée s'étendant vers le bas sous ladite ouverture (10a) d'extrémité inférieure et formant un logement apte à recevoir une zone arrière (23) de la tête (20) de fourche placée en regard de ladite zone (13) de butée de manière à réaliser un système de butée apte à limiter un déplacement de ladite tête (20) de fourche en cas de choc frontal sur la roue avant (3).

2. Ensemble pour cycle selon la revendication 1, **caractérisé en ce qu'**il comporte un élément élastiquement déformable (14 ; 15) entre ladite zone arrière (23) et ladite zone (13) de butée.

3. Ensemble pour cycle selon la revendication 1, **caractérisé en ce qu'**il comporte un élément intercalé entre ladite zone arrière (23) et ladite zone (13) de butée, apte à faciliter un glissement de la zone arrière (23) de la tête de fourche sur la zone (13) de butée lors d'un pivotement de la fourche (2) avant.

4. Ensemble pour cycle selon l'une quelconque des revendications précédentes, **caractérisé en ce que** la douille (10) de direction comporte au moins une portion longitudinale intermédiaire de diamètre égal à 25 millimètres.

5. Ensemble pour cycle selon l'une quelconque des revendications précédentes, **caractérisé en ce que** le pivot (21) de fourche s'étend dans la douille (10) de direction au travers d'un roulement inférieur (4a) d'un jeu de direction.

6. Ensemble pour cycle selon la revendication 5, **caractérisé en ce que** le pivot (21) de fourche s'étend dans la douille (10) de direction au travers d'un roulement supérieur (4b) dudit jeu de direction.

7. Ensemble pour cycle selon la revendication 5, **caractérisé en ce que** le pivot (21) de fourche comporte une extrémité libre (24) placée en-dessous d'un roulement supérieur (4b) dudit jeu de direction, à laquelle est fixée, solidaire en rotation, une extrémité libre d'un pivot (50) de potence lié à rotation avec un corps de potence (5).

8. Ensemble pour cycle selon la revendication 7, **caractérisé en ce que** l'extrémité libre du pivot (21) de fourche et l'extrémité libre du pivot (50) de potence sont conformées de manière à réaliser ensemble un couplage de type Hirth.

9. Ensemble pour cycle selon l'une quelconque des revendications 7 à 8, **caractérisé en ce que** le pivot (21) de fourche et le pivot (50) de potence sont fixés l'un à l'autre par l'intermédiaire d'une vis (7) s'étendant longitudinalement dans l'axe de la douille (10) de direction.

10. Ensemble pour cycle selon la revendication 9, **caractérisé en ce que** le pivot (21) de fourche, la vis (7) et le pivot (50) de potence sont creux pour permettre le passage d'au moins un câble.

11. Ensemble pour cycle selon l'une quelconque des revendications 7 à 10, **caractérisé en ce que** le pivot (50) de potence et le corps de potence (5) forment une pièce de potence monobloc.

12. Ensemble pour cycle selon l'une quelconque des revendications précédentes, **caractérisé en ce que** le pivot (21) de fourche, la tête (20) de fourche et ladite au moins une branche (22) forment une fourche avant monobloc.

13. Ensemble pour cycle selon l'une quelconque des revendications précédentes, **caractérisé en ce qu'**il comporte en outre un système de butée de direction pour limiter le débattement angulaire de la fourche, le système comportant une première gorge (27) sur la tête (20) de fourche, une deuxième gorge (16) sur le cadre (1) au niveau de la zone (13) de butée, et un élément (26) de butée de direction monté libre entre la première gorge (27) et la deuxième gorge (16).

14. Ensemble pour cycle selon la revendication 13, **caractérisé en ce que** l'élément de butée de direction est un pion (26) apte à se déplacer transversalement dans lesdites première et deuxièmes gorges (27, 16).

15. Ensemble pour cycle selon la revendication 13, **caractérisé en ce que** l'élément (26) de butée de direction est une bille apte à rouler dans lesdites première et deuxièmes gorges (27, 16).

16. Ensemble pour cycle selon l'une quelconque des revendications 13 à 15, **caractérisé en ce que**, le débattement angulaire de la fourche étant limité à 120°, chacune des première et deuxième gorges est dimensionnée pour offrir 60° de liberté à l'élément (26) de butée de direction.

## Patentansprüche

1. Anordnung für Fahrrad, umfassend:
- einen Fahrradrahmen (1), umfassend ein Steuerrohr (10), das eine untere Endöffnung (10a) und eine obere Endöffnung (10b) aufweist, und
- eine vordere Gabel (2), die einen Gabelkopf (20) mit einem Gabelzapfen (21) darüber aufweist, der sich längs im Steuerrohr (10) erstreckt, und mindestens einen Schenkel (22), der sich vom Gabelkopf (20) in eine Richtung erstreckt, die der Richtung des Gabelzapfens (21) entgegengesetzt ist, um ein Vorderrad (3) zu stützen,
**dadurch gekennzeichnet, dass** der Gabelzapfen (21) einen Außendurchmesser kleiner als 25 Millimeter aufweist und dass das Steuerrohr (10) eine Anschlagzone (13) aufweist, die sich nach unten unter der unteren Endöffnung (10a) erstreckt und eine Aufnahme bildet, die imstande ist, eine hintere Zone (23) des Gabelkopfs (20) aufzunehmen, die gegenüber der Anschlagzone (13) derart platziert ist, das ein Anschlagsystem entsteht, das imstande ist, eine Verlagerung des Gabelkopfs (20) bei einem frontalen Stoß auf das Vorderrad (3) zu begrenzen.

2. Anordnung für Fahrrad nach Anspruch 1, **dadurch gekennzeichnet, dass** sie ein elastisch verformbares Element (14; 15) zwischen der hinteren Zone (23) und der Anschlagzone (13) aufweist.

3. Anordnung für Fahrrad nach Anspruch 1, **dadurch gekennzeichnet, dass** sie ein Zwischenelement zwischen der hinteren Zone (23) und der Anschlagzone (13) aufweist, das imstande ist, bei einem Schwenken der vorderen Gabel (2) ein Gleiten der hinteren Zone (23) des Gabelkopfs auf der Anschlagzone (13) zu erleichtern.

4. Anordnung für Fahrrad nach einem der vorangehenden Ansprüche, **dadurch gekennzeichnet, dass** das Steuerrohr (10) mindestens einen länglichen Übergangsabschnitt mit einem Durchmesser von gleich 25 Millimetern aufweist.

5. Anordnung für Fahrrad nach einem der vorangehenden Ansprüche, **dadurch gekennzeichnet, dass** sich der Gabelzapfen (21) im Steuerrohr (10) durch ein unteres Lager (4a) eines Lenkerspiels erstreckt.

6. Anordnung für Fahrrad nach Anspruch 5, **dadurch gekennzeichnet, dass** sich der Gabelzapfen (21) im Steuerrohr (10) durch ein oberes Lager (4b) des Lenkerspiels erstreckt.

7. Anordnung für Fahrrad nach Anspruch 5, **dadurch gekennzeichnet, dass** der Gabelzapfen (21) ein freies Ende (24) aufweist, das unter einem oberen Lager (4b) des Lenkerspiels platziert ist, an dem ein freies Ende eines Auslegerzapfens (50), der mit einem Auslegerkörper (5) rotierend verbunden ist, rotierend fest verbunden ist.

8. Anordnung für Fahrrad nach Anspruch 7, **dadurch gekennzeichnet, dass** das freie Ende des Gabelzapfens (21) und das freie Ende des Auslegerzapfens (50) derart ausgebildet sind, dass sie eine Hirth-Kopplungsanordnung bilden.

9. Anordnung für Fahrrad nach einem der Ansprüche 7 bis 8, **dadurch gekennzeichnet, dass** der Gabelzapfen (21) und der Auslegerzapfen (50) mit Hilfe einer Schraube (7) aneinander befestigt sind, die sich längs in der Achse des Steuerrohrs (10) erstreckt.

10. Anordnung für Fahrrad nach Anspruch 9, **dadurch gekennzeichnet, dass** der Gabelzapfen (21), die Schraube (7) und der Auslegerzapfens (50) hohl sind, um den Durchgang von mindestens einem Kabel zu erlauben.

11. Anordnung für Fahrrad nach einem der Ansprüche 7 bis 10, **dadurch gekennzeichnet, dass** der Auslegerzapfens (50) und der Auslegerkörper (5) ein Einblock-Auslegerteil bilden.

12. Anordnung für Fahrrad nach einem der vorangehenden Ansprüche, **dadurch gekennzeichnet, dass** der Gabelzapfen (21), der Gabelkopf (20) und der mindestens eine Schenkel (22) eine vordere Einblock-Gabel bilden.

13. Anordnung für Fahrrad nach einem der vorangehenden Ansprüche, **dadurch gekennzeichnet, dass** sie ferner ein Lenkungsanschlagsystem aufweist, um den Winkelausschlag der Gabel zu begrenzen, wobei das System eine erste Aussparung (27) auf dem Gabelkopf (20), eine zweite Aussparung (16) auf dem Rahmen (1) im Bereich der Anschlagzone (13) und ein Lenkungsanschlagelement (26), das zwischen der ersten Aussparung (27) und der zweiten Aussparung (16) frei montiert ist, aufweist.

14. Anordnung für Fahrrad nach Anspruch 13, **dadurch gekennzeichnet, dass** das Lenkungsanschlagelement ein Stift (26) ist, der imstande ist, sich transversal in der ersten und zweiten Aussparung (27, 16) zu verlagern.

15. Anordnung für Fahrrad nach Anspruch 13, **dadurch gekennzeichnet, dass** das Lenkungsanschlagelement (26) eine Kugel ist, die imstande ist, in der ersten und zweiten Aussparung (27, 16) zu rollen.

16. Anordnung für Fahrrad nach einem der Ansprüche 13 bis 15, **dadurch gekennzeichnet, dass**, wobei der Winkelausschlag der Gabel auf 120° begrenzt ist, die erste als auch die zweite Aussparung bemessen ist, um dem Lenkungsanschlagelement (26) 60° Freiheit zu gewähren.

## Claims

1. An assembly for a cycle including:
- a cycle frame (1) comprising a head tube (10) having a lower end opening (10a) and an upper end opening (10b), and
- a front fork (2) including a fork crown (20) topped by a steerer tube (21) extending longitudinally inside the head tube (10) and at least one branch (22) extending from the fork crown (20) in a direction opposite that of the steerer tube (21), to support a front wheel (3);
**characterized in that** the steerer tube (21) has an outer diameter smaller than 25 millimeters and **in that** the head tube (10) has a stop zone (13) extending downward below said lower end opening (10a) and forming a housing able to receive a rear zone (23) of the fork crown (20) placed across from said stop zone (13) so as to produce a stop system able to limit movement of said fork crown (20) in case of a frontal impact on the front wheel (3).

2. The assembly for a cycle according to claim 1, **characterized in that** it includes an elastically deformable element (14; 15) between said rear zone (23) and said stop zone (13).

3. The assembly for a cycle according to claim 1, **characterized in that** it includes an element inserted between said rear zone (23) and said stop zone (13), able to facilitate sliding of the rear zone (23) of the fork crown on the stop zone (13) during pivoting of the front fork (2).

4. The assembly for a cycle according to any one of the preceding claims, **characterized in that** the head tube (10) includes at least one intermediate longitudinal portion with a diameter equal to 25 millimeters.

5. The assembly for a cycle according to any one of the preceding claims, **characterized in that** the steerer tube (21) extends in the head tube (10) through a lower rolling bearing (4a) of a headset.

6. The assembly for a cycle according to claim 5, **characterized in that** the steerer tube (21) extends in the head tube (10) through an upper rolling bearing (4b) of said headset.

7. The assembly for a cycle according to claim 5, **characterized in that** the steerer tube (21) includes a free end (24) placed below an upper rolling bearing (4b) of said headset, to which a free end of a stem pivot (50) is fastened, secured in rotation, the latter being rotatably connected to a stem body (5).

8. The assembly for a cycle according to claim 7, **characterized in that** the free end of the steerer tube (21) and the free end of the stem pivot (50) are configured so as to produce a Hirth-type coupling together.

9. The assembly for a cycle according to any one of claims 7 to 8, **characterized in that** the steerer tube (21) and the stem pivot (50) are fastened to one another using a screw (7) extending longitudinally in the axis of the head tube (10).

10. The assembly for a cycle according to claim 9, **characterized in that** the steerer tube (21), the screw (7) and the stem pivot (50) are hollow to allow the passage of at least one cable.

11. The assembly for a cycle according to any one of claims 7 to 10, **characterized in that** the stem pivot (50) and the stem body (5) form a single-piece stem part.

12. The assembly for a cycle according to any one of the preceding claims, **characterized in that** the steerer tube (21), the fork crown (20) and said at least one branch (22) form a single-piece front fork.

13. The assembly for a cycle according to any one of the preceding claims, **characterized in that** it further includes a steering stop system to limit the angular travel of the fork, the system including a first groove (27) on the fork crown (20), a second groove (16) on the frame (1) at the stop zone (13), and steering stop elements (26) mounted free between the first groove (27) and the second groove (16).

14. The assembly for a cycle according to claim 13, **characterized in that** the steering stop element is a pin (26) able to move transversely in said first and second grooves (27, 16).

15. The assembly for a cycle according to claim 13, **characterized in that** the steering stop element (26) is a bead able to roll in said first and second grooves (27, 16).

16. The assembly for a cycle according to any one of claims 13 to 15, **characterized in that**, the angular travel of the fork being limited to 120°, each of the first and second grooves is sized to offer 60° of freedom to the steering stop element (26).
